(19) Europäisches Patentamt
European Patent Office
Office européen des brevets

(11) **EP 3 351 515 B1**

(12) **EUROPÄISCHE PATENTSCHRIFT**

(45) Veröffentlichungstag und Bekanntmachung des Hinweises auf die Patenterteilung:
**07.04.2021 Patentblatt 2021/14**

(51) Int Cl.:
***C04B 22/06*** *(2006.01)*      ***C04B 28/02*** *(2006.01)*
***C04B 40/00*** *(2006.01)*

(21) Anmeldenummer: **17199642.4**

(22) Anmeldetag: **02.11.2017**

(54) **TIO2-HALTIGE SUSPENSION ZUR HERSTELLUNG EINER ZUSAMMENSETZUNG MIT PHOTOKATALYTISCHEN EIGENSCHAFTEN**

TIO2-CONTAINING SUSPENSION FOR THE PREPARATION OF A COMPOSITION WITH PHOTOCATALYTIC PROPERTIES

SUSPENSION CONTENANT DU TIO2 DESTINÉE À LA PRODUCTION D'UNE COMPOSITION AUX PROPRIÉTÉS PHOTOCATALYTIQUES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.12.2016 DE 102016124299**

(43) Veröffentlichungstag der Anmeldung:
**25.07.2018 Patentblatt 2018/30**

(73) Patentinhaber:
• **Remei Blomberg GmbH & Co. KG**
  **32825 Blomberg (DE)**
• **Betonwerk Lintel GmbH & Co. KG**
  **33378 Rheda-Wiedenbrück (DE)**

(72) Erfinder:
• **Klink, Manuela**
  **32805 Horn-Bad Meinberg (DE)**
• **Husemann, Svenja**
  **32107 Bad Salzuflen (DE)**

(74) Vertreter: **Sandvoß, Stefanie**
  **Patentanwaltskanzlei Sandvoß**
  **Dethmarstraße 44a**
  **31139 Hildesheim (DE)**

(56) Entgegenhaltungen:
EP-A1- 1 752 429      WO-A1-2004/074202
WO-A1-2010/130314      CN-A- 104 446 594

**Beschreibung**

Die Erfindung betrifft eine $TiO_2$-haltige Suspension zur Herstellung einer Zusammensetzung mit photokatalytischen Eigenschaften, welche sich insbesondere durch einen hervorragenden Selbstreinigungseffekt auszeichnet. Eingearbeitet in die obere Schicht von Pflastersteinen oder ähnlichen Bodenbefestigungen bewirkt die erfindungsgemäße $TiO_2$-haltige Suspension somit eine Zersetzung unerwünschter Ablagerungen, welche effektiver ist als deren Abbau durch vorbekannte photokatalytische Materialien. Des Weiteren betrifft die Erfindung auch ein Verfahren zur Betonherstellung unter Verwendung der $TiO_2$-haltigen Suspension.

**Stand der Technik**

Der Einsatz photokatalytisch aktiver Substanzen ist insbesondere im Zusammenhang mit Oberflächen, die starken und/oder dauerhaften Umwelteinflüssen ausgesetzt sind, bekannt. Insbesondere ist es bekannt, Wegbefestigungen, die in der Regel aus Beton sind, mit einer oberflächennahen Schicht (Vorsatzschicht) zu versehen, in welche photokatalytisch aktive Partikel eingebracht sind, die oberflächlich anhaftenden Staub, Dreck oder Grünbewuchs infolge lichtinduzierter Oxidations- und Reduktionsprozesse zersetzen.

So beschreibt beispielsweise die EP 0 786 283 B1 einen $NO_x$-reinigenden Pflasterstein mit einer Vorsatzschicht, die 100 Gewichtsteile an Zement, 5-50 Gewichtsteile $TiO_2$ und 100-700 Gewichtsteile Sand enthält.

WO 2004/074202 A1 beschreibt einen Pflasterstein mit photokatalytisch aktiver Vorsatzschicht auf Basis einer Zement-Zusammensetzung, die ein hydraulisches Bindemittel, $TiO_2$-Photokatalysator mit einer spezifischen Oberfläche zwischen 15 und 350 $m^2$/g, Wasser, zumindest ein Aggregat (z.B. Silika), sowie optional Wasser reduzierende Additive enthält. Als wasserreduzierende Additive können zudem Produkte auf Basis von Lignosulfonaten oder Naphthalin, Melamin oder Acrylsäure enthalten sein. Zur Herstellung der Zusammensetzung wird eine trockene Vormischung verwendet, die die vorgenannten Bestandteile mit Ausnahme von Wasser enthält.

EP 2 236 476 A1 beschreibt ein Verfahren zur Herstellung einer Slurry für Oberflächenanwendungen. Zur Herstellung der Slurry werden Sand und Füllstoff, vorzugsweise in Anwesenheit von Wasser, vermischt, wobei mind. 30 Gew.-% des Füllstoffs $TiO_2$ ist. Zu der Mischung wird eine Bindemittel-Emulsion gegeben, anschließend wird erneut vermischt.

EP 2 597 073 A1 beschreibt eine trockene Baustoffmischung, die einen feinteiligen Photokatalysator, bevorzugt $TiO_2$, und einen puzzolanischen Träger, insbesondere Flugasche, enthält. Nach der Vermengung, beispielsweise in einem Intensivtrockenmischer, liegt der Photokatalysator vorzugsweise verteilt auf der Trägeroberfläche vor.

WO 2008/142205 A1 beschreibt eine pulverförmige Trockenmischung, die Partikel aus Trägermaterial, z.B. $SiO_2$, ein wasserbindendes Medium sowie photokatalytisch aktive Partikel enthält, die an der Oberfläche des Trägermaterials anhaften.

WO 2014/118371 A1 beschreibt eine bindemittelfreie $TiO_2$ enthaltende Dispersion zur Beschichtung von Oberflächen. Das $TiO_2$ ist nanoskalig, im Bereich von 2-500 nm, und mind. 50 % des enthaltenen Titans ist auswaschbar in 37 % iger Salzsäure, wodurch die Suspension besonders gut an protonierbaren Oxiden wie $SiO_2$ haften soll. Zu beschichtende Substrate werden mit der Dispersion kontaktiert und anschließend getrocknet.

WO 2010/130314 A1 beschreibt eine Zusammensetzung zum Einfärben hydraulischer Bindemittelsysteme, insbesondere zum Einfärben von Beton. Die Zusammensetzung enthält ein oberflächenmodifiziertes Farbstoffpigment, ein Dispergiermittel sowie optional einen Phasenvermittler und weitere Inhaltsstoffe. Als Modifizierungsmittel werden beispielsweise Silane oder Siloxane beschrieben, als mögliche Dispergiermittel werden Ligninsulfonate, Naphthalinsulfonsäuren und Naphthalinsulfonsäurederivate sowie Mischungen dieser genannt.

Die CN 104 446 594 A beschreibt ein zementbasiertes Kompositmaterial, das neben Zement auch Aggregate, Wasser, Additive und einen Katalysator auf Basis von Titandioxid und Graphitoxid enthält. Optional können als Additive Wasserreduzierer auf Basis von Lignin oder Naphthalin enthalten sein.

**Aufgabe der Erfindung**

Es ist die Aufgabe der vorliegenden Erfindung, eine alternative $TiO_2$-haltige Suspension bereitzustellen, die sich bevorzugt als solche sowie auch eingearbeitet in eine insbesondere bindemittelhaltige Zusammensetzung durch sehr gute photokatalytische Wirksamkeit auszeichnet, die die photokatalytische Wirksamkeit von vorbekannten Zusammensetzungen bevorzugt übertrifft. Eine weitere Aufgabe der vorliegenden Erfindung liegt darin, ein neues Verfahren zur Herstellung von Vorsatzbeton unter Verwendung der $TiO_2$-haltigen Suspension bereitzustellen, wobei der durch das erfindungsgemäße Verfahren hergestellte Vorsatzbeton vorzugsweise eine gegenüber herkömmlichem Vorsatzbeton erhöhte photokatalytische Wirksamkeit aufweist, bevorzugt bei geringerem Gehalt an photokatalytischem Material.

## Allgemeine Beschreibung der Erfindung

Die Erfindung löst diese Aufgabe mit den Merkmalen der Ansprüche und insbesondere durch Bereitstellen einer $TiO_2$-haltigen Suspension zur Herstellung einer Zusammensetzung mit photokatalytischen Eigenschaften, wobei die $TiO_2$-haltige Suspension 25 bis 35 Gew.-% eines mineralischen Füllstoffs, 8 bis 27 Gew.-% $TiO_2$, 1 bis 10 Gew.-% einer wässrigen Lösung enthaltend Ligninsulfonat und Naphthalinsulfonatformaldehydkondensat sowie 0,3 bis 2,2 Gew.-% einer wässrigen Lösung eines Polyacrylsalzes und/oder 0,3 bis 2,5 Gew.-% einer Silan- und/oder Siloxan-haltigen Emulsion enthält.

Der in der erfindungsgemäßen Suspension enthaltene mineralische Füllstoff ist Silika, nämlich Mikrosilika oder Nanosilika.

Das enthaltene Titandioxid liegt insbesondere in einer Anatasform vor und weist eine spezifische Oberfläche > 225 $m^2$/g auf. Besonders bevorzugt enthält die erfindungsgemäße Suspension 15-30 Gew.-%, insbesondere 15-20 Gew.-%, einer $TiO_2$-haltigen Zusammensetzung, deren $TiO_2$-Gehalt bei > 87,5 Gew.-% liegt und in der das $TiO_2$ in einer Anatasform mit einer spezifischen Oberfläche > 225 $m^2$/g vorliegt. Weitere Inhaltsstoffe der $TiO_2$-haltigen Zusammensetzung sind beispielsweise Spurenelemente.

Als Betonverflüssiger enthält die erfindungsgemäße $TiO_2$-haltige Zusammensetzung sowohl Ligninsulfonat als auch Naphthalinsulfonatformaldehydkondensat, welche kombiniert in einer wässrigen Lösung in der erfindungsgemäßen Suspension enthalten sind. Hier liegt der wesentliche Unterschied der erfindungsgemäßen $TiO_2$-haltigen Suspension zu vorbekannten $TiO_2$-haltigen Suspensionen, die in den meisten Fällen Ligninsulfonat oder Naphthalinsulfonatformaldehydkondensat enthalten, jedoch nicht beides in Kombination. Doch es hat sich gezeigt, dass gerade diese Kombination von Ligninsulfonat und Naphthalinsulfonatformaldehydkondensat in Kombination mit den weiteren Bestandteilen der erfindungsgemäßen $TiO_2$-haltigen Zusammensetzung sich positiv auf die photokatalytische Wirksamkeit der Suspension bzw. der die Suspension enthaltenden Zusammensetzung, insbesondere einer Beton-Zusammensetzung zum Einsatz als Vorsatzschicht, auswirkt.

Die wässrige Lösung enthaltend Ligninsulfonat und Naphthalinsulfonatformaldehydkondensat ist zu 1-10 Gew.-%, insbesondere zu 3-9 Gew.-% in der erfindungsgemäßen Suspension enthalten, wobei das Ligninsulfonat und das Naphthalinsulfonatformaldehydkondensat insbesondere zu im wesentlichen gleichen Gewichtsanteilen in der wässrigen Lösung enthalten sind. Auch andere Verhältnisse von Ligninsulfonat zu Naphthalinsulfonatformaldehydkondensat in der wässrigen Lösung sind jedoch möglich. Insbesondere können Ligninsulfonat und Naphthalinsulfonatformaldehydkondensat auch mit gleichen Stoffmengenanteilen in der wässrigen Lösung enthalten sein, oder es kann entweder Ligninsulfonat oder Naphthalinsulfonatformaldehydkondensat im Überschuss in der wässrigen Lösung enthalten sein.

Bevorzugt handelt es sich bei dem enthaltenen Ligninsulfonat um ein Erdalkaliligninsulfonat, beispielsweise Magnesiumligninsulfonat.

Weiterhin enthält die erfindungsgemäße Suspension auch 0,3 bis 2,2 Gew.-% einer wässrigen Lösung eines Polyacrylsalzes und/oder 0,3 bis 2,5 Gew.-% einer Silan- und/oder Siloxan-haltigen Emulsion als Hydrophobierungsmittel. Bei der wässrigen Lösung des Polyacrylsalzes handelt es sich insbesondere um eine wässrige Lösung eines Natriumsalzes einer Polyacrylsäure, die insbesondere 38-42-%ig, besonders bevorzugt 40-%ig ist. Als Silan- und/oder Siloxan-haltigen Emulsion wird erfindungsgemäß insbesondere eine Triethoxyoctylsilan und Aminoethylaminopropylpolysiloxan enthaltende Emulsion eingesetzt.

Gemäß einer besonders bevorzugten Ausführungsform enthält die erfindungsgemäße $TiO_2$-haltige Suspension 25 bis 35 Gew.-% Mikrosilika, 8 bis 27 Gew.-% $TiO_2$ in einer Anatasform mit einer spezifischen Oberfläche > 225 $m^2$/g, 1 bis 10 Gew.-% einer wässrigen Lösung enthaltend Magnesiumligninsulfonat und Naphthalinsulfonatformaldehydkondensat, sowie 0,3 bis 2,2 Gew.-% einer wässrigen Lösung eines Polyacrylsalzes und/oder 0,3 bis 2,5 Gew.-% einer Triethoxyoctylsilan und Aminoethylaminopropylpolysiloxan enthaltenden Emulsion.

Neben der im Vergleich zu herkömmlichen $TiO_2$-haltigen Suspension, insbesondere zu Suspensionen, die nur entweder Magnesiumligninsulfonat oder Naphthalinsulfonatformaldehydkondensat enthalten, erhöhten photokatalytischen Wirksamkeit der erfindungsgemäßen Suspension zeichnet sich diese überdies auch dadurch aus, dass der Farbeindruck von Bodenbefestigungen, z.B. von Pflastersteinen, die die erfindungsgemäße Suspension in der Vorsatzschicht enthalten, unverändert bleibt. Denn es ist bekannt, dass bei Einbringung herkömmlicher $TiO_2$-haltiger Suspensionen in Bodenbefestigungen zwecks Generierung selbstreinigender Oberflächen insbesondere in dunklen Pflastersteine die Farbe der Steine verändert wird, indem diese heller werden. Diese unerwünschte Farbänderung tritt bei Einsatz einer erfindungsgemäßen $TiO_2$-haltigen Suspension, die zwecks Generierung photokatalytisch aktiver Oberflächen in einen solchen Stein eingebracht wird, nicht auf.

Während die erhöhte photokatalytische Wirksamkeit erfindungsgemäßer Suspensionen im Vergleich zu herkömmlichen $TiO_2$-haltigen Suspensionen insbesondere auf den gleichzeitigen Enthalt von Magnesiumligninsulfonat, Naphthalinsulfonatformaldehydkondensat und den weiteren Bestandteilen der Suspension zurückgeführt wird, wird der unveränderte Farbeindruck der die erfindungsgemäße Suspension enthaltenden Steine insbesondere auf das neue Herstellungsverfahren für Beton bzw. Vorsatzbeton unter Verwendung der erfindungsgemäßen Suspension zurückgeführt, das an späterer Stelle noch detaillierter beschrieben wird.

Die Erfindung betrifft weiterhin auch die Verwendung der erfindungsgemäßen TiO$_2$-haltigen Suspension zur Herstellung einer Zusammensetzung mit photokatalytischen Eigenschaften, die insbesondere eine Beton-Zusammensetzung zur Verwendung als Vorsatzschicht in Pflastersteinen ist. Entsprechend wird auch eine Zusammensetzung mit photokatalytischen Eigenschaften beansprucht, die die erfindungsgemäße Suspension enthält. Besonders bevorzugt enthält diese erfindungsgemäße Zusammensetzung, die wahlweise flüssig oder fest sein kann, mindestens 8 Gew.-% der erfindungsgemäßen TiO$_2$-haltigen Suspension. Außerdem enthält die erfindungsgemäße Zusammensetzung vorzugsweise auch Bindemittel, Wasser und Zuschlagskorn.

Die Erfindung betrifft außerdem auch ein Verfahren zur Herstellung von Beton, insbesondere von Vorsatzbeton, d.h. von Beton, der für die etwa 10 mm dicke oberflächennahe Schicht von Pflastersteinen, Platten und ähnlichen Bodenbefestigungen verwendet wird.

In dem erfindungsgemäßen Verfahren werden zunächst Zuschlagskorn, Bindemittel und Wasser vermengt. Anschließend wird die entstehende Mischung mit der erfindungsgemäßen TiO$_2$-haltigen Suspension versetzt, bevor erneut gemischt wird.

In dem erfindungsgemäßen Verfahren eingesetztes Zuschlagskorn bzw. eingesetzte Zuschlagskörner werden bevorzugt ausgewählt aus Sand, Kies (feine oder grobe Gesteinskörnung), Flugasche, Kalksteinmehl, Fasern und Mineralgemischen. Ein bevorzugtes Mineralgemisch besteht aus oder umfasst z.B. Kaolinit, Illit und Quarz.

Das Bindemittel, welches bevorzugt Zement ist, bildet mit dem ebenfalls zugefügten Wasser einen Bindemittelleim, bevorzugt einen Zementleim, welcher das Zuschlagskorn bei der Vermengung mit dem Bindemittel und dem Wasser zumindest teilweise ummantelt, sodass die Oberfläche des Zuschlagskorns zum überwiegenden Teil und bevorzugt vollständig mit Bindemittelleim bzw. Zementleim bedeckt ist.

Erst nach der Vermengung von Zuschlagskorn, Bindemittel und Wasser wird die entstehende Mischung, die dann im Wesentlichen von Bindemittelleim ummantelte Zuschlagskörner umfasst oder daraus besteht, mit der TiO$_2$-haltigen Suspension versetzt und erneut vermengt.

Hier liegt der zentrale Unterschied des erfindungsgemäßen Verfahrens zur Herstellung von Beton mit photokatalytisch aktivem Zusatz im Vergleich zu vorbekannten Verfahren. In aus dem Stand der Technik bekannten Verfahren werden nämlich Zuschlagskorn, Bindemittel, Wasser und der photokatalytisch aktive Zusatz, z.B. enthalten in einer Suspension oder Trockenmischung, zeitgleich miteinander vermengt. Dabei werden die Zuschlagskörner von einer Schicht aus Bindemittel und Wasser enthaltendem Bindemittelleim und photokatalytisch aktivem Zusatz ummantelt. Der photokatalytisch aktive Zusatz, z.B. das TiO$_2$, liegt daher bei nach herkömmlichen Verfahren hergestelltem Beton homogen verteilt in der gesamten Breite der das Zuschlagskorn umgebenden Schicht vor, weshalb verhältnismäßig viel photokatalytisch aktiver Zusatz benötigt wird, um eine ausreichend hohe photokatalytische Aktivität zu erzielen.

Im Gegensatz dazu wird in dem erfindungsgemäßen Verfahren dadurch, dass die TiO$_2$-haltige Suspension erst nach der Vermengung von Zuschlagskorn, Bindemittel und Wasser zu der entstehenden Mischung gegeben wird, eine zweite Schicht um die erste das Zuschlagskorn umgebende Schicht aus Bindemittelleim gebildet. Diese im zweiten Verfahrensschritt gebildete äußere Schicht, welche das photokatalytisch aktive TiO$_2$ enthält, hat bevorzugt gar keinen Kontakt zu dem Zuschlagskorn, welches im ersten Verfahrensschritt von der inneren Schicht aus Bindemittel und Wasser ummantelt wurde. Gemäß dem erfindungsgemäßen Verfahren ist der photokatalytisch aktive Zusatz daher nur an der Oberfläche der ummantelten Zuschlagskörner, d.h. nur dort, wo er zur Erzielung der photokatalytischen Wirkung benötigt wird, und nicht in der gesamten Dicke der Ummantelung verteilt.

Es ist daher ein immenser Vorteil des erfindungsgemäßen Verfahrens im Vergleich zu vorbekannten Verfahren, dass der Bedarf an photokatalytisch aktivem Zusatz zur Erzielung der gleichen Wirkung, d.h. der gleichen photokatalytischen Aktivität, deutlich verringert ist bzw. dass die photokatalytische Aktivität bei gleichem Gehalt an photokatalytischem Zusatz deutlich erhöht ist.

## Genaue Beschreibung der Erfindung

Die Erfindung wird nun genauer anhand von Ausführungsbeispielen und mit Bezug auf die Figuren beschrieben, in denen

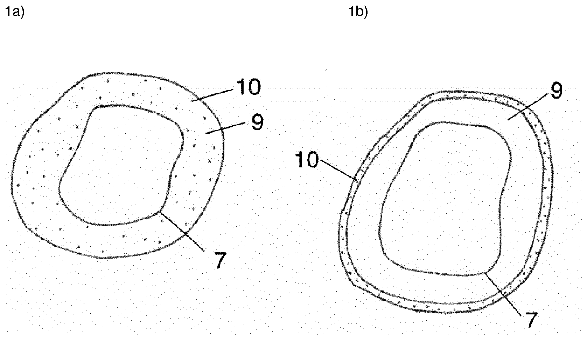

- die Figur 1a schematisch einen Querschnitt durch ein nach einem konventionellen Verfahren hergestelltes ummanteltes Zuschlagskorn zeigt, und
- die Figur 1b schematisch einen Querschnitt durch ein nach einem erfindungsgemäßen Verfahren hergestelltes ummanteltes Zuschlagskorn zeigt.

Anhand der Figur 1 wird der Unterschied zwischen einem nach einem konventionellen Verfahren hergestellten ummantelten Zuschlagskorn 7 und einem durch ein erfindungsgemäßes Verfahren hergestellten ummantelten Zuschlagskorn 7 deutlich. Während das durch ein konventionelles Verfahren zur Betonherstellung ummantelte Zuschlagskorn 7 von nur einer Schicht umgeben ist (vgl. Fig. 1a), in der Bindemittelleim 9, z.B. Zementleim, und photokatalytisch aktives Material, z.B. $TiO_2$-Partikel 10 in homogener Mischung vorliegen, ist das durch ein erfindungsgemäßes Verfahren zur Betonherstellung unter Verwendung der $TiO_2$-haltigen Suspension 1 ummantelte Zuschlagskorn 7 von einer inneren Schicht, die aus Bindemittelleim 9, z.B. Zementleim, besteht, umgeben, welche wiederum von einer verhältnismäßig dünnen, äußeren Schicht umgeben ist, in der die photokatalytisch aktiven $TiO_2$-Partikel 10 enthalten sind.

Da bei der zweischichtigen Ummantelung von Zuschlagskörnern 7, wie sie durch ein erfindungsgemäßes Verfahren entsteht, zur Erzielung der photokatalytischen Wirkung nur in der äußeren Schicht $TiO_2$-Partikel 10 erforderlich sind, ist im Vergleich zu nach herkömmlichen Verfahren zur Betonherstellung gewonnenen mit Bindemittelleim und $TiO_2$ ummantelten Zuschlagskörnern deutlich weniger photokatalytisch aktives Material, d.h. $TiO_2$-Partikel 10, erforderlich, um eine vergleichbare photokatalytische Wirkung zu erzielen. Bei Verwendung gleicher Mengen Photokatalysator in einem herkömmlichen Verfahren zur Betonherstellung und in einem erfindungsgemäßen Verfahren zur Betonherstellung ist die photokatalytische Wirkung des erfindungsgemäß hergestellten Betons entsprechend deutlich höher als die des konventionell hergestellten Betons.

Beispiel 1: Vergleich der photokatalvtischen Aktivitäten einer erfindungsgemäßen $TiO_2$-haltigen Suspension, einer $TiO_2$-haltigen Suspension ohne Naphthalinsulfonatformaldehydkondensat und einer $TiO_2$-haltigen Suspension ohne Ligninsulfonat

Es wurden fünf Betonprüfkörper hergestellt, von denen zwei Prüfkörper eine erfindungsgemäße $TiO_2$-haltigen Suspension mit Ligninsulfonat und Naphthalinsulfonatformaldehydkondensat enthalten und drei Prüfkörper eine nicht erfindungsgemäße $TiO_2$-haltige Suspension, die entweder nur Ligninsulfonat oder Naphthalinsulfonatformaldehydkondensat enthielt. Die erfindungsgemäße wie auch die nicht erfindungsgemäße $TiO_2$-haltige Suspension waren jeweils zu 8 % in der Zusammensetzung der Prüfkörper enthalten.

Die Tabelle 1 gibt einen Überblick über das in den fünf Prüfkörpern enthaltene Ligninsulfonat und Naphthalinsulfonatformaldehydkondensat:

Tabelle 1: Zusammensetzung der Prüfkörper

| Prüfkörper | Ligninsulfonat (L), Naphthalinsulfonatformaldehydkondensat (N) | Dosierung |
|---|---|---|
| V1 | N | 8% |
| V2 | L | 8% |
| V3 | L, N | 8% |
| V4 | L | 8% |
| V5 | L, N | 8% |

Die Prüfkörper V3 und V5 enthalten zu jeweils 8 % die erfindungsgemäße Suspension, die Ligninsulfonat und Naphthalinsulfonatformaldehydkondensat enthält. Die Prüfkörper V2 und V4 enthalten zu jeweils 8 % eine nicht-erfindungsgemäße Suspension, die Ligninsulfonat, jedoch kein Naphthalinsulfonatformaldehydkondensat enthält, und der Prüfkörper V1 enthält zu 8 % eine nicht-erfindungsgemäße Suspension, die Naphthalinsulfonatformaldehydkondensat, jedoch kein Ligninsulfonat enthält. Abgesehen von dem Gehalt an Ligninsulfonat und Naphthalinsulfonatformaldehydkondensat unterscheiden sich die eingesetzten erfindungsgemäßen und nicht erfindungsgemäßen $TiO_2$-haltigen Suspension nicht voneinander.

Die frisch hergestellten Probekörper V1, V2, V3, V4 und V5 wurden auf den Abbau von NO in der Gasphase untersucht. Dazu wurden die Probekörper vor der Messung für 5 Tage mit 1 mW/$cm^2$ UV-A Licht vorbestrahlt.

Abbau von NOx:

Die photokatalytische NO-Oxidation wird in einer Apparatur gemessen, in der Luft (relative Luftfeuchte 50 %) mit einem Gehalt von 1 ppm NO und einer Flussrate von 3 L/min über eine Probe der Größe 50 x 100 $mm^2$ geleitet wird.

Die Analyse erfolgt mit einem NO/$NO_2$-Analysator, der über einen Fluoreszenzdetektor mit einer Nachweisgrenze von 1 ppb NO verfügt. Die Bestrahlung erfolgt mit UV-(A)-Lampen, wobei die Lichtintensität an der Probenoberfläche 1 mW/$cm^2$ beträgt.

Die Bestrahlungsleistung beträgt 1 mW/$cm^2$, was bei einer Probengröße von 50 $cm^2$ einer Gesamtleistung von 50 mW entspricht. Bei einer mittleren Bestrahlungswellenlänge von 350 nm gilt:

$$50\ mW = 1,47 \times 10^{-7}\ molh\nu / s. \qquad (1)$$

Die kontinuierliche Messapparatur wird mit einer Flussrate von 3 L/min betrieben. Für ein ideales Gas gilt: 24 *L Gas = 1 mol (bei p = 1 bar und 25°)* d.h., in 8 min strömt 1 mol Gas über die Probe. Davon sind 1 ppm NO, also strömen $10^{-6}$ mol NO über die Probe. In dieser Zeit wird die Probe mit *1,47 x 10⁻⁷ molhν/s x 60 s/min x 8 min = 70 x 10⁻⁶ molhv* bestrahlt.

Bei einem vollständigen Abbau des zudosierten NO würde die Photoneneffizienz $\zeta$ somit: *ζ = 10⁻⁶ mol NO / 70 x 10⁻⁶ molhv = 0,0143 = 1,43* % betragen. Misst man einen Abbau von x ppm NO, so berechnet sich die Photoneneffizienz entsprechend nach Formel (2):

$$\zeta x = x\ (ppm) * 1,43\ (\% / ppm) \qquad (2)$$

Messergebnisse:

Probenkörper V1:

NO-Abbau: 0,053 ppm (Anfang), Photoneneffizienz $\zeta$ = 0,076 %
NO-Abbau: 0,042 ppm (Ende), Photoneneffizienz $\zeta$ = 0,060 %
$NO_x$-Abbau: 0,042 ppm (Anfang), Photoneneffizienz $\zeta$ = 0,060 %
$NO_x$-Abbau: 0,026 ppm (Ende), Photoneneffizienz $\zeta$ = 0,037 %
$NO_2$-Bildung: 0,011 ppm (Anfang), Photoneneffizienz $\zeta$ = 0,0157%
$NO_2$-Bildung: 0,016 ppm (Ende) Photoneneffizienz $\zeta$ = 0,023%

Probenkörper V2:

NO-Abbau: 0,043 ppm (Anfang), Photoneneffizienz $\zeta$ = 0,061 %
NO-Abbau: 0,038 ppm (Ende), Photoneneffizienz $\zeta$ = 0,054 %
$NO_x$-Abbau: 0,031 ppm (Anfang), Photoneneffizienz $\zeta$ = 0,044 %
$NO_x$-Abbau: 0,024 ppm (Ende), Photoneneffizienz $\zeta$ = 0,034 %
$NO_2$-Bildung: 0,012 ppm (Anfang), Photoneneffizienz $\zeta$ = 0,017%
$NO_2$-Bildung: 0,014 ppm (Ende), Photoneneffizienz $\zeta$ = 0,02 %

Probenkörper V3:

NO-Abbau: 0,145 ppm (Anfang), Photoneneffizienz $\zeta$ = 0,21 %
NO-Abbau: 0,105 ppm (Ende), Photoneneffizienz $\zeta$ = 0,15 %
$NO_x$-Abbau: 0,081 ppm (Anfang), Photoneneffizienz $\zeta$ = 0,116 %
$NO_x$-Abbau: 0,053 ppm (Ende), Photoneneffizienz $\zeta$ = 0,076 %
$NO_2$-Bildung: 0,064 ppm (Anfang), Photoneneffizienz $\zeta$ = 0,092 %
$NO_2$-Bildung: 0,052 ppm (Ende), Photoneneffizienz $\zeta$ = 0,074 %

Probenkörper V4:

NO-Abbau: 0,033 ppm (Anfang), Photoneneffizienz $\zeta$ = 0,047 %
NO-Abbau: 0,032 ppm (Ende), Photoneneffizienz $\zeta$ = 0,046 %
$NO_x$-Abbau: 0,028 ppm (Anfang), Photoneneffizienz $\zeta$ = 0,04 %
$NO_x$-Abbau: 0,0235 ppm (Ende), Photoneneffizienz $\zeta$ = 0,034 %
$NO_2$-Bildung: 0,005 ppm (Anfang), Photoneneffizienz $\zeta$ = 0,0072 %

NO$_2$-Bildung: 0,0085 ppm (Ende), Photoneneffizienz $\zeta$ = 0,012 %

Probenkörper V5:

NO-Abbau: 0,124 ppm (Anfang), Photoneneffizienz $\zeta$ = 0,18 %
NO-Abbau: 0,095 ppm (Ende), Photoneneffizienz $\zeta$ = 0,136 %
NO$_x$-Abbau: 0,075 ppm (Anfang), Photoneneffizienz $\zeta$ = 0,11 %
NO$_x$-Abbau: 0,053 ppm (Ende), Photoneneffizienz $\zeta$ = 0,076 %
NO$_2$-Bildung: 0,049 ppm (Anfang), Photoneneffizienz $\zeta$ = 0,070 %
NO$_2$-Bildung: 0,042 ppm (Ende), Photoneneffizienz $\zeta$ = 0,060 %

**1. Berechnung der abgebauten NO-Menge:**

Die verwendeten Testbedingungen entsprechen der Norm ISO 22197-1 (1 ppm NO, 3 L/min Luftströmung, 50 % relative Luftfeuchtigkeit (RH), 1 mW/cm$^2$ UV (A) Bestrahlung). Somit kann aus den hier gemessenen Daten nach (3) entsprechend der ISO- Norm 22197-1 die abgebaute Menge NO in $\mu$mol berechnet werden:

$$n_{NO} = 3L\ min^{-1} / 22{,}4\ L\ mol^{-1} \times (C_{NO,in} - C_{NO,out}) \times 300\ min \qquad (3)$$

Für Prüfkörper **V1**:

$C_{NO,\ in} - C_{NO,\ out}$ = 0,042 ppm, d.h., 0,042 $\mu$L/L
$n_{NO}$ = (3/22,4) x 0,042 x 300 $\mu$mol
$n_{NO}$ = 1,69 $\mu$mol (in 5 h Bestrahlungszeit)

Für Prüfkörper **V2**:

$C_{NO,\ in} - C_{NO,\ out}$ = 0,038 ppm, d.h., 0,038 $\mu$L/L
$n_{NO}$ = 1,53 $\mu$mol (in 5 h Bestrahlungszeit)

Für Prüfkörper **V3**:

$C_{NO,\ in} - C_{NO,\ out}$ = 0,105 ppm, d.h., 0,105 $\mu$L/L
$n_{NO}$ = 4,22 $\mu$mol (in 5 h Bestrahlungszeit)

Für Prüfkörper **V4**:

$C_{NO,\ in} - C_{NO,\ out}$ = 0,032 ppm, d.h., 0,032 $\mu$L/L
$n_{NO}$ = 1,29 $\mu$mol (in 5 h Bestrahlungszeit)

Für Prüfkörper **V5**:

$C_{NO,\ in} - C_{NO,\ out}$ = 0,095 ppm, d.h., 0,095 $\mu$L/L
$n_{NO}$ = 3,82 $\mu$mol (in 5 h Bestrahlungszeit)

**2. Berechnung der abgebauten NO$_x$-Menge:**

Analog berechnet sich die Menge an abgebautem NO$_x$ nach (4):

$$n_{NOx} = 3L\ min^{-1} / 22{,}4\ L\ mol^{-1} \times (C_{NOx,in} - C_{NOx,out}) \times 300\ min \qquad (4)$$

Für Prüfkörper **V1**:

$C_{NOx,\ in} - C_{NOx,\ out}$ = 0,026 ppm, d.h., 0,026 $\mu$L/L

$n_{NOx}$ = (3/22,4) x 0,026 x 300 µmol

$n_{NOx}$ = 1,04 µmol (in 5 h Bestrahlungszeit)

Für Prüfkörper **V2**:

$C_{NOx, in}$ - $C_{NOx, out}$ = 0,024 ppm, d.h., 0,024 µL/L

$n_{NOx}$ = 0,96 µmol (in 5 h Bestrahlungszeit)

Für Prüfkörper **V3**:

$C_{NOx, in}$ - $C_{NOx, out}$ = 0,053 ppm, d.h., 0,053 µL/L

$n_{NOx}$ = 2,13 µmol (in 5 h Bestrahlungszeit)

Für Prüfkörper **V4**:

$C_{NOx, in}$ - $C_{NOx, out}$ = 0,0235 ppm, d.h., 0,0235 µL/L

$n_{NOx}$ = 0,94 µmol (in 5 h Bestrahlungszeit)

Für Prüfkörper **V5**:

$C_{NOx, in}$ - $C_{NOx, out}$ = 0,053 ppm, d.h., 0,053 µL/L

$n_{NOx}$ = 2,13 µmol (in 5 h Bestrahlungszeit)

### 3. Berechnung der Menge an gebildetem $NO_2$:

Die Menge an gebildetem $NO_2$ berechnet sich nach (5):

$$n_{NO2} = 3L\ min^{-1} / 22,4\ L\ mol^{-1} \times (C_{NO2,\ in} - C_{NO2,\ out}) \times 300\ min \qquad (5)$$

Für Prüfkörper **V1**:

$C_{NO2, in}$ - $C_{NO2, out}$ = 0,016 ppm, d.h., 0,016 µL/L

$n_{NO2}$ = (3/22,4) x 0,016 x 300 µmol

$n_{NO2}$ = 0,64 µmol (in 5 h Bestrahlungszeit)

Für Prüfkörper **V2**:

$C_{NO2, in}$ - $C_{NO2, out}$ = 0,014 ppm, d.h., 0,014 µL/L

$n_{NO2}$ = 0,56 µmol (in 5 h Bestrahlungszeit)

Für Prüfkörper **V3**:

$C_{NO2, in}$ - $C_{NO2, out}$ = 0,052 ppm, d.h., 0,052 µL/L

$n_{NO2}$ = 2,09 µmol (in 5 h Bestrahlungszeit)

Für Prüfkörper **V4**:

$C_{NO2, in}$ - $C_{NO2, out}$ = 0,0085 ppm, d.h., 0,0085 µL/L

$n_{NO2}$ = 0,34 µmol (in 5 h Bestrahlungszeit)

Für Prüfkörper **V5**:

$C_{NO2, in}$ - $C_{NO2, out}$ = 0,042 ppm, d.h., 0,042 µL/L

$n_{NO2}$ = 1,69 µmol (in 5 h Bestrahlungszeit)

**4. Berechnung des Abbaus von NO in mg/m$^2$h:**

Das Molekulargewicht von NO beträgt *30 g mol$^{-1}$,* die beleuchtete Oberfläche beträgt *0,005 m$^2$.* Der Abbau von 1 $\mu$mol entspricht *30 $\mu$g oder 6 mg/m$^2$.*

Der Prüfkörper **V1** baut 1,69 $\mu$mol in 5h, d.h. 0,34 $\mu$mol/h oder **2,04 mg NO/m$^2$h** ab.

Der Prüfkörper **V2** baut 1,53 $\mu$mol in 5h, d.h. 0,31 $\mu$mol/h oder **1,86 mg NO/m$^2$h** ab.

Der Prüfkörper **V3** baut 4,22 $\mu$mol in 5h, d.h. 0,84 $\mu$mol/h oder **5,04 mg NO/m$^2$h** ab.

Der Prüfkörper **V4** baut 1,29 $\mu$mol in 5h, d.h. 0,26 $\mu$mol/h oder **1,56 mg NO/m$^2$h** ab.

Der Prüfkörper **V5** baut 3,82 $\mu$mol in 5h, d.h. 0,76 $\mu$mol/h oder **4,56 mg NO/m$^2$h** ab.

Ein Wert von mehr als 5,0 mg NO/m$^2$h kann als ausgezeichnete Abbauleistung angesehen werden.

**5. Bewertung der Ergebnisse:**

Die Prüfkörper V3 und V5, welche die erfindungsgemäße Suspension mit Ligninsulfonat und Naphthalinsulfonatformaldehydkondensat enthalten, zeigen mit Effizienzen von $\zeta$ = 0,14 % (NO-Abbau Endwert) bis $\zeta$ = 0,15 % eine gute Aktivität für den photokatalytischen Abbau von NO in der Gasphase (befriedigend: 0,05 % < $\zeta$ < 0,1 %; gut: 0,1 % < $\zeta$ < 0,2 %; sehr gut: 0,2 % < $\zeta$ < 0,5 %; exzellent: $\zeta$ > 0,5%).

Die Aktivität der Prüfkörper V1, V2 und V4, welche TiO$_2$-haltige Suspensionen mit nur einem der beiden Inhaltsstoffe Ligninsulfonat und Naphthalinsulfonatformaldehydkondensat enthalten, kann mit Effizienzen von $\zeta$ = 0,05 % bzw. 0,06 % (NO-Abbau Endwert) dagegen nur mit befriedigend bewertet werden.

Die photokatalytische Wirksamkeit der erfindungsgemäßen TiO$_2$-haltigen Suspension, die sowohl Ligninsulfonat und Naphthalinsulfonatformaldehydkondensat enthält, gegenüber TiO$_2$-haltigen Suspensionen, die nur entweder Ligninsulfonat oder Naphthalinsulfonatformaldehydkondensat enthalten, ist daher etwa um den Faktor 2-3 erhöht.

Beispiel 2: Einfluss einer erfindungsgemäßen TiO$_2$-haltigen Suspension im Vergleich zu einer konventionellen TiO$_2$-haltigen Zusammensetzung auf die Farbgebung in einem dunklen Stein

Um den Einfluss einer erfindungsgemäßen TiO$_2$-haltigen Suspension im Vergleich zu einer konventionellen TiO$_2$-haltigen Zusammensetzung auf die Farbgebung in einem dunklen Stein zu untersuchen, werden drei Steine mit jeweils 5 % Eisenoxid-Schwarz Pigment und jeweils 8 % TiO$_2$-haltiger Suspension hergestellt. Der Stein 1 enthielt dabei die erfindungsgemäße Suspension mit Ligninsulfonat und Naphthalinsulfonatformaldehydkondensat, während der Stein 2 eine nicht erfindungsgemäße TiO$_2$-haltige Suspension mit Naphthalinsulfonatformaldehydkondensat und ohne Ligninsulfonat, und der Stein 3 eine nicht erfindungsgemäße TiO$_2$-haltige Suspension mit Ligninsulfonat und ohne Naphthalinsulfonatformaldehydkondensat enthielt. Abgesehen von den unterschiedlichen Gehalten an Ligninsulfonat und Naphthalinsulfonatformaldehydkondensat waren die drei verwendeten Suspensionen jedoch identisch.

Der Einfluss der drei Suspensionen auf die Farbgebung ergibt sich aus Tabelle 1, in welcher die Ergebnisse anhand des L*a*b*-Farbsystems dargestellt sind.

Tabelle 1: Einfluss der Suspensionen auf die Farbgebung in einem dunklen Stein

| Ligninsulfonat (L), Naphthalinsulfonatformaldehydkondensat (N) | L* | a* | b* | Delta L* |
|---|---|---|---|---|
| L, N | 37,77 | 0,38 | -0,05 | |
| N | 43,37 | 0,28 | 0,13 | + 5,6 |
| L | 48,51 | 0,14 | 0,04 | + 10,74 |

Wie der Tabelle 1 zu entnehmen ist, ist die Einfärbung mit der erfindungsgemäßen TiO$_2$-haltigen Suspension, die sowohl Ligninsulfonat als auch Naphthalinsulfonatformaldehydkondensat enthält,

5,6 - 10,75 % dunkler als die Einfärbung mit einer TiO$_2$-haltigen Suspension, die nur einen dieser beiden Bestandteile enthält.

Die in der vorstehenden Beschreibung, in den Figuren sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein.

Bezugszeichenliste:

1    TiO$_2$-haltige Suspension
2    Zusammensetzung mit photokatalytischen Eigenschaften
3    mineralischer Füllstoff
4    wässrige Lösung mit Ligninsulfonat und Naphthalinsulfonatformaldehydkondensat
5    wässrige Lösung eines Polyacrylsalzes
6    Silan- und/oder Siloxan-haltigen Emulsion
7    Zuschlagskorn
8    Bindemittel
9    Bindemittelleim
10   TiO$_2$

**Patentansprüche**

1.  TiO$_2$-haltige Suspension (1) zur Herstellung einer Zusammensetzung (2) mit photokatalytischen Eigenschaften, **dadurch gekennzeichnet, dass** die TiO$_2$-haltige Suspension (1)

    - 25 bis 35 Gew.-% mikro- oder nanoskaliges Silika,
    - 8 bis 27 Gew.-% TiO$_2$,
    - 1 bis 10 Gew.-% einer wässrigen Lösung (4), enthaltend Ligninsulfonat und Naphthalinsulfonatformaldehydkondensat,
    - 0,3 bis 2,2 Gew.-% einer wässrigen Lösung eines Polyacrylsalzes (5) und/oder 0,3 bis 2,5 Gew.-% einer Silan-und/oder Siloxan-haltigen Emulsion (6) enthält.

2.  TiO$_2$-haltige Suspension (1) nach Anspruch 1, **dadurch gekennzeichnet, dass** das enthaltene TiO$_2$ eine spezifische Oberfläche > 225 m$^2$/g aufweist.

3.  TiO$_2$-haltige Suspension (1) nach einem der voranstehenden Ansprüche, **dadurch gekennzeichnet, dass** die Silan-und/oder Siloxan-haltige Emulsion (6) Triethoxyoctylsilan und Aminoethylaminopropylpolysiloxan enthält.

4.  TiO$_2$-haltige Suspension (1) nach einem der voranstehenden Ansprüche, **dadurch gekennzeichnet, dass** die wässrige Lösung (4) Magnesiumligninsulfonat enthält.

5.  TiO$_2$-haltige Suspension (1) nach einem der voranstehenden Ansprüche, **dadurch gekennzeichnet, dass** die TiO$_2$-haltige Suspension (1)

    - 25 bis 35 Gew.-% Mikrosilika,
    - 8 bis 27 Gew.-% TiO$_2$ in einer Anatasform mit einer spezifischen Oberfläche > 225 m$^2$/g,
    - 1 bis 10 Gew.-% einer wässrigen Lösung (4), enthaltend Magnesiumligninsulfonat und Naphthalinsulfonatformaldehydkondensat,
    - 0,3 bis 2,2 Gew.-% einer wässrigen Lösung eines Polyacrylsalzes (5) und/oder 0,3 bis 2,5 Gew.-% einer Triethoxyoctylsilan und Aminoethylaminopropylpolysiloxan enthaltenden Emulsion (6)
    enthält.

6.  Zusammensetzung (2) mit photokatalytischen Eigenschaften, **dadurch gekennzeichnet, dass** die Zusammensetzung (2) mindestens 8 Gew.-% der TiO$_2$-haltigen Suspension (1) nach einem der Ansprüche 1 bis 5 sowie Bindemittel, Wasser und Zuschlagskorn enthält.

7.  Verwendung einer TiO$_2$-haltigen Suspension (1) nach einem der Ansprüche 1 bis 5 zur Herstellung einer Zusammensetzung (2) mit photokatalytischen Eigenschaften.

8.  Verfahren zur Betonherstellung unter Verwendung der TiO$_2$-haltigen Suspension (1) nach einem der Ansprüche 1 bis 5, wobei Zuschlagskorn (7), Bindemittel (8) und Wasser vermengt werden und die entstehende Mischung an-schließend mit einer TiO$_2$-haltigen Suspension (1) nach einem der Ansprüche 1 bis 5 versetzt wird.

9.  Verfahren nach Anspruch 8, **dadurch gekennzeichnet, dass** das Zuschlagskorn (7) ausgewählt ist aus Sand, Kies und Flugasche.

**EP 3 351 515 B1**

## Claims

1.  TiO$_2$-containing suspension (1) for production of a composition (2) having photocatalytic properties, **characterized in that** the TiO$_2$-containing suspension (1) contains

    - 25 to 35% by weight of micro- or nano-scale silica,
    - 8 to 27% by weight TiO$_2$,
    - 1 to 10% by weight of an aqueous solution (4) containing lignin sulfonate and naphthalene sulfonate formaldehyde condensate,
    - 0.3 to 2.2% by weight of an aqueous solution of a polyacrylic salt (5) and/or 0.3 to 2.5% by weight of a silane- and/or siloxane-containing emulsion (6).

2.  TiO$_2$-containing suspension (1) according to claim 1, **characterized in that** the TiO$_2$ contained has a specific surface area > 225 m$^2$/g.

3.  TiO$_2$-containing suspension (1) according to one of the preceding claims, **characterized in that** the silane- and/or siloxane-containing emulsion (6) contains triethoxyoctylsilane and aminoethylaminopropylpolysiloxane.

4.  TiO$_2$-containing suspension (1) according to one of the preceding claims, **characterized in that** the aqueous solution (4) contains magnesium ligninsulfonate.

5.  TiO$_2$-containing suspension (1) according to one of the preceding claims, **characterized in that** the TiO$_2$-containing suspension (1) contains

    - 25 to 35% by weight microsilica,
    - 8 to 27 % by weight TiO$_2$ in an anatase form having a specific surface area > 225 m$^2$/g,
    - 1 to 10% by weight of an aqueous solution (4) containing magnesium lignin sulfonate and naphthalene sulfonate formaldehyde condensate,
    - 0.3 to 2.2% by weight of an aqueous solution of a polyacrylic salt (5) and/or 0.3 to 2.5% by weight of an emulsion (6) containing triethoxyoctylsilane and aminoethylaminopropylpolysiloxane.

6.  Composition (2) having photocatalytic properties, **characterized in that** the composition (2) contains at least 8 % by weight of the TiO$_2$-containing suspension (1) according to one of the claims 1 to 5 as well as binder, water and aggregate.

7.  Use of a TiO$_2$-containing suspension (1) according to one of the claims 1 to 5 for the production of a composition (2) having photocatalytic properties.

8.  Process for production of concrete using the TiO$_2$-containing suspension (1) according to one of the claims 1 to 5, wherein aggregate (7), binder (8) and water are mixed and subsequently the TiO$_2$-containing suspension (1) according to one of the claims 1 to 5 is added to the resulting mixture.

9.  Process according to claim 8, **characterized in that** the aggregate (7) is selected from sand, gravel and fly ash.

## Revendications

1.  Suspension (1) contenant du TiO$_2$, destinée à la préparation d'une composition (2) à propriétés photocatalytiques, **caractérisée en ce que** la suspension (1) contenant du TiO$_2$ contient

    - 25 à 35 % en poids de silice micro- ou nanométrique,
    - 8 à 27 % en poids de TiO$_2$,
    - 1 à 10 % en poids d'une solution aqueuse (4) contenant du ligninesulfonate et du produit de condensation naphtalènesulfonate-formaldéhyde,
    - 0,3 à 2,2 % en poids d'une solution aqueuse d'un sel polyacrylique (5) et/ou 0,3 à 2,5 % en poids d'une émulsion (6) contenant un silane et/ou un siloxane.

2.  Suspension (1) contenant du TiO$_2$ selon la revendication 1, **caractérisée en ce que** le TiO$_2$ contenu présente une

surface spécifique > 225 m$^2$/g.

3. Suspension (1) contenant du TiO$_2$ selon l'une quelconque des revendications précédentes, **caractérisée en ce que** l'émulsion (6) contenant un silane et/ou un siloxane contient du triéthoxyoctylsilane et de l'aminoéthylaminopropyl-polysiloxane.

4. Suspension (1) contenant du TiO$_2$ selon l'une quelconque des revendications précédentes, **caractérisée en ce que** la solution aqueuse (4) contient du ligninesulfonate de magnésium.

5. Suspension (1) contenant du TiO$_2$ selon l'une quelconque des revendications précédentes, **caractérisée en ce que** la suspension (1) contenant du TiO$_2$ contient

   - 25 à 35 % en poids de microsilice,
   - 8 à 27 % en poids de TiO$_2$ sous une forme d'anatase ayant une surface spécifique > 225 m$^2$/g,
   - 1 à 10 % en poids d'une solution aqueuse (4) contenant du ligninesulfonate de magnésium et du produit de condensation naphtalènesulfonate-formaldéhyde,
   - 0,3 à 2,2 % en poids d'une solution aqueuse d'un sel polyacrylique (5) et/ou 0,3 à 2,5 % en poids d'une émulsion (6) contenant du triéthoxyoctylsilane et de l'aminoéthylaminopropylpolysiloxane.

6. Composition (2) à propriétés photocatalytiques, **caractérisée en ce que** la composition (2) contient au moins 8 % en poids de la suspension (1) contenant du TiO$_2$ selon l'une quelconque des revendications 1 à 5 ainsi qu'un liant, de l'eau et du granulat.

7. Utilisation d'une suspension (1) contenant du TiO$_2$ selon l'une quelconque des revendications 1 à 5, pour la préparation d'une composition (2) à propriétés photocatalytiques.

8. Procédé pour la production de béton avec utilisation de la suspension (1) contenant du TiO$_2$ selon l'une quelconque des revendications 1 à 5, dans lequel on mélange du granulat (7), un liant (8) et de l'eau et on ajoute ensuite au mélange résultant une suspension (1) contenant du TiO$_2$ selon l'une quelconque des revendications 1 à 5.

9. Procédé selon la revendication 8, **caractérisé en ce que** le granulat (7) est choisi parmi le sable, le gravier et les cendres volantes.

1a)

1b)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0786283 B1
- WO 2004074202 A1
- EP 2236476 A1
- EP 2597073 A1
- WO 2008142205 A1
- WO 2014118371 A1
- WO 2010130314 A1
- CN 104446594 A